# EUROPEAN PATENT APPLICATION

(11) **EP 4 763 745 A1**
(43) Date of publication of application: **24.06.2026**
(21) Application number: 24893155.2
(22) Date of filing: 25.10.2024
(51) Int. Cl.: B65G 1/04, B65G 1/137

(54) **GOODS SHELF, LOGISTICS SYSTEM, CONTROL METHOD FOR LOGISTICS SYSTEM, AND STORAGE MEDIUM**

(30) Priority: 23.11.2023 CN 202311579845
(71) Applicant: Hai Robotics Co., Ltd., Shenzhen, Guangdong 518000 (CN)
(72) Inventor: ZHANG, Feiyue, Shenzhen, Guangdong 518000 (CN); CHEN, Kai, Shenzhen, Guangdong 518000 (CN); YE, Yihua, Shenzhen, Guangdong 518000 (CN); LI, Xiaolong, Shenzhen, Guangdong 518000 (CN)
(74) Representative: Gulde & Partner
(86) International application number: PCT/CN2024/127506
(87) International publication number: WO 2025/107997

(57) **Abstract**

This application provides a shelving unit, a logistics system, a logistics system control method, and a storage medium. The shelving unit provided in this application includes a shelving unit body, a guide rail, a movable gantry, and a goods retrieving or depositing device. The shelving unit body includes multiple warehouse levels disposed at intervals along a height direction of the shelving unit. Each warehouse level has multiple warehouse positions disposed along a length direction of the shelving unit. The corresponding warehouse positions in different warehouse levels form warehouse columns disposed along the height direction of the shelving unit. The guide rail is connected to the shelving unit body, and the guide rail is configured to extend along the length direction of the shelving unit. The movable gantry is located at a side of the shelving unit body, and the movable gantry is movably connected to the guide rail. The movable gantry is configured to extend along the height direction of the shelving unit, and the movable gantry is configured to dock with or detach from the goods retrieving or depositing device. In this way, the manufacturing cost of the logistics system may be reduced, increasing the warehouse density of the shelving unit and improving logistics efficiency.

## Description

### CROSS-REFERENCES

This application claims priority to Chinese Patent Application No. 202311579845.6, filed with the China National Intellectual Property Administration on November 23, 2023 and entitled "SHELVING UNIT, LOGISTICS SYSTEM, LOGISTICS SYSTEM CONTROL METHOD, AND STORAGE MEDIUM", which is incorporated herein by reference in its entirety.

### TECHNICAL FIELD

This application relates to the field of warehouse logistics technologies, and in particular, to a shelving unit, a logistics system, a logistics system control method, and a storage medium.

### BACKGROUND OF THE INVENTION

The storage method using a three-dimensional warehouse is widely applied in the field of warehouse logistics due to large storage capacity of the three-dimensional warehouse. With the advancement of artificial intelligence and automation technologies, the automation level of logistics systems has been continuously increasing. The three-dimensional warehouse can dock with an external device through an automated apparatus to implement automatic retrieving or depositing of goods.

In related technologies, a shelving unit of the three-dimensional warehouse has a relatively high height and has multiple rows and multiple columns of warehouse positions for storing containers. The logistics system can use climbing robots to retrieve or deposit containers at high positions. A pair of upright posts is fixedly disposed on both sides of each warehouse position of the shelving unit, and the climbing robots can climb along the upright posts.

However, in the current logistics system, a shelving unit with multiple columns of warehouse positions requires multiple sets of upright posts, resulting in high production costs. Additionally, the multiple sets of upright posts occupy significant space, leading to decreased storage density of the shelving unit.

### SUMMARY OF THE INVENTION

This application provides a shelving unit, a logistics system, a logistics system control method, and a storage medium, to solve the technical problem of high production cost in the current logistics system, significant space occupation of multiple sets of upright posts, and decreased storage density of the shelving unit.

According to a first aspect, this application provides a shelving unit including a shelving unit body, a guide rail, a movable gantry, and a goods retrieving or depositing device. The shelving unit body includes multiple warehouse levels disposed at intervals along a height direction of the shelving unit. Each warehouse level has multiple warehouse positions disposed along a length direction of the shelving unit. The warehouse positions corresponding to different warehouse levels form warehouse columns disposed along the height direction of the shelving unit. The guide rail is connected to the shelving unit body, and the guide rail is configured to extend along the length direction of the shelving unit. The movable gantry is located at a side of the shelving unit body, and the movable gantry is movably connected to the guide rail. The movable gantry is configured to extend along the height direction of the shelving unit, and the movable gantry is configured to dock with or detach from a goods retrieving or depositing device. When the movable gantry is docked with the goods retrieving or depositing device, the movable gantry is configured to allow the goods retrieving or depositing device to move along the height direction of the shelving unit.

In the logistics system provided in embodiments of this application, by providing a movable gantry that can move relative to the shelving unit, the goods retrieving or depositing device can climb along the movable gantry, so that the goods retrieving or depositing device can climb to the warehouse levels at different heights through the movable gantry, and can also move to the warehouse columns at different positions through the movable gantry, thereby reducing the manufacturing cost of the logistics system and improving the warehouse density of the shelving unit.

In some embodiments, the guide rail has a sliding groove, and the guide rail is configured to extend along the length direction of the guide rail. The movable gantry includes a support body and a roller, the roller is rotatably connected to the support body; and at least part of the roller is located in the sliding groove. When the movable gantry moves along the guide rail, the roller is configured to roll along the sliding groove.

By means of such disposition, the friction between the movable gantry and the guide rail may be reduced, improving smoothness of movement of the movable gantry relative to the guide rail.

In some embodiments, there are multiple rollers. The multiple rollers are distributed at intervals along a width direction of the support body, and the multiple rollers are all rollingly disposed in sliding groove.

By means of such disposition, multiple support points are provided for the movable gantry on the guide rail, thereby improving movement stability of the movable gantry relative to the guide rail.

In some embodiments, the support body may include at least two upright posts and multiple crossbeams, all the upright posts extend along the height direction of the shelving unit, and the crossbeams connected between the two upright posts; the movable gantry may further include a driving assembly, the driving assembly is disposed on the crossbeams, and the driving assembly is configured to drive the rollers to rotate.

By means of such disposition, the position of the movable gantry in the length direction of the shelving unit can be accurately adjusted according to the order requirements for retrieval and deposition.

In some embodiments, the logistics system may further includes a first conductive member, the first conductive member is disposed in the sliding groove and is configured to extend along the sliding groove. The movable gantry includes a second conductive member, the second conductive member is disposed on the rollers and electrically connected to the first conductive member, and the second conductive member is electrically connected to the driving assembly. The first conductive member is configured to supply power to the driving assembly through the second conductive member.

By means of such disposition, there is no need to install a power source on the movable gantry, reducing the occupied space of the movable gantry and enabling continuous and stable operation of the movable gantry.

In some embodiments, the driving assembly includes a driving unit, a controlling unit, and a transmission member, the second conductive member is electrically connected to the control unit, the control unit is electrically connected to the driving unit, and an output end of the driving unit is connected to the rollers through the transmission member.

By means of such disposition, the stability and reliability of the rollers rolling along the sliding groove may be improved.

In some embodiments, the guide rail may include a first guide rail and a second guide rail, the first guide rail is disposed at a top of the shelving unit, and the second guide rail is disposed at a bottom of the shelving unit. A height of the movable gantry matches the height of the shelving unit, and two ends of the movable gantry are movably connected to the first guide rail and the second guide rail respectively.

By means of such disposition, the reliability of movable connection of the movable gantry on a side of the shelving unit may be improved.

In some embodiments, the first conductive member may include a live-wire conductive member and a neutral-wire conductive member, the live-wire conductive member is disposed on the first guide rail, and the neutral-wire conductive member is disposed on the second guide rail. The upright posts are provided with at least two conductive contact pieces, the contact pieces are configured to extend along the height direction of the movable gantry, and at least two of the conductive contact pieces are electrically connected to the live-wire conductive member and the neutral-line conductive member respectively.

By means of such disposition, an external power source can be connected, so as to facilitate wiring, improve safety, and ensure the stability of the power supply.

In some embodiments, inner side of each upright post is provided with a guide groove, the guide groove is configured to extend along the height direction of the movable gantry, and the conductive contact pieces can be disposed within the guide grooves respectively.

By means of such disposition, the smoothness of the movement of the goods retrieving or depositing device along the movable gantry may be improved, and power supply through the upright posts is implemented, thereby reducing the power and size of the motor on the goods retrieving or depositing device.

In some embodiments, the first conductive member and the guide rail are an integral molded piece.

By means of such disposition, power can be directly supplied through the guide rail, ensuring the reliability of the power supply.

In some embodiments, the multiple crossbeams are disposed at intervals along the height direction of the shelving unit, and a distance between adjacent crossbeams matches a level height of the warehouse level.

By means of such disposition, the goods retrieving or depositing device can be prevented from interfering with the crossbeams when retrieving or depositing goods from the warehouse positions.

According to a second aspect, this application provides a goods retrieving or depositing device and the shelving unit according to the foregoing technical solutions. The goods retrieving or depositing device is configured to dock with the movable gantry of the shelving unit and is configured to move along an extending direction of the movable gantry. The movable gantry is configured to move along a guide rail of the shelving unit, so that the goods retrieving or depositing device aligns with different warehouse positions of the warehouse levels at different heights of the shelving unit.

In some embodiments, the movable gantry is provided with conductive contact pieces, and when the goods retrieving or depositing device docks with the movable gantry, at least part of the structures on both sides of the goods retrieving or depositing device are electrically connected to the conductive contact pieces.

In some embodiments, the movable gantry is provided with an identification marker on a side facing the goods retrieving or depositing device, and when the goods retrieving or depositing device is aligned with the identification marker, a position of a corresponding warehouse level is readable by the goods retrieving or depositing device through the identification marker.

By means of such disposition, the accuracy of the moving position of the goods retrieving or depositing device when the goods retrieving or depositing device moves along the movable gantry may be improved.

According to a third aspect, this application provides a logistics system control method. The method is used for a controller of the logistics system, and the method includes:
sending first position information to the movable gantry, causing the movable gantry to move along the guide rail to the warehouse column corresponding to a first target warehouse position in the shelving unit; and
sending a goods retrieving or depositing instruction to the goods retrieving or depositing device, causing the goods retrieving or depositing device to move to the warehouse column corresponding to the first target warehouse position in the shelving unit, and causing the goods retrieving or depositing device to move along the movable gantry to the warehouse column corresponding to the first target warehouse position in the shelving unit after docked with the movable gantry, to retrieve or deposit first target goods.

The logistics system control method provided in this application may allow a goods retrieving or depositing device to climb through the movable gantry, thereby eliminating the need to provide multiple climbing rails, reducing costs, improving warehouse space utilization, and enhancing logistics efficiency.

In some embodiments, before the sending a first position information to the movable gantry, the method further includes:
receiving order information and determining a target shelving unit and a target warehouse position according to the order information, where the target warehouse position is located on the target shelving unit, and the target warehouse position includes the first target warehouse position.

In some embodiments, before the goods retrieving or depositing device docks with the movable gantry, the method further includes:
the goods retrieving or depositing device identifies ground marker information, and moves to a position corresponding to the movable gantry according to the ground marker information.

In some embodiments, after the goods retrieving or depositing device docks with the movable gantry, the method further includes:
the goods retrieving or depositing device identifies an identification marker on the movable gantry, and moves to a warehouse level corresponding to the first target warehouse position in the shelving unit according to the identification marker.

The logistics system control method provided in this application may be suitable for the logistics system in the foregoing technical solutions.

According to a fourth aspect, this application provides a storage medium, where the storage medium stores computer-executable instructions which, when executed, are used to implement the logistics system control method in the foregoing technical solutions.

This application provides a shelving unit, a logistics system, a logistics system control method, and a storage medium, where the shelving unit includes a shelving unit body, a guide rail, and a movable gantry. The shelving unit body includes multiple warehouse levels disposed at intervals along a height direction of the shelving unit. Each warehouse level has multiple warehouse positions disposed along a length direction of the shelving unit. The warehouse positions corresponding to different warehouse levels form warehouse columns disposed along the height direction of the shelving unit. The guide rail is connected to the shelving unit body, and the guide rail extends along the length direction of the shelving unit. The movable gantry is located at a side of the shelving unit body, and the movable gantry is movably connected to the guide rail. The movable gantry extends along the height direction of the shelving unit. In this way, it can reduce the manufacturing cost of the logistics system, increase the warehouse density of the shelving unit, and improve logistics efficiency.

In addition to the technical problems resolved in the embodiments of this application, the technical features constituting the technical solutions, and the beneficial effects brought by the technical features of the technical solutions described above, other technical problems, other technical features included in the technical solutions, and the beneficial effects brought by the technical features that can be resolved by the shelving unit, the logistics system, the logistics system control method, and the storage medium provided in this application are further described in detail in specific technical solutions.

### BRIEF DESCRIPTION OF DRAWINGS

To describe the technical solutions of the embodiments of this application or the related art more clearly, the accompanying drawings required for describing the embodiments or the related art are briefly introduced below. Apparently, the accompanying drawings in the following descriptions show some embodiments of this application, and a person of ordinary skill in the art may still derive other drawings from these accompanying drawings without creative efforts.
FIG. 1 is a first schematic structural diagram of a logistics system according to an embodiment of this application;
FIG. 2 is a second schematic structural diagram of a logistics system according to an embodiment of this application;
FIG. 3 is a partial view of a position A in FIG. 1;
FIG. 4 is a side view of a logistics system according to an embodiment of this application;
FIG. 5 is a partial view of a position B in FIG. 4;
FIG. 6 is a front view of a logistics system according to an embodiment of this application;
FIG. 7 is a schematic structural diagram of a movable gantry in a logistics system according to an embodiment of this application;
FIG. 8 is a partial view of a position C in FIG. 7;
FIG. 9 is a flowchart of a logistics system control method according to an embodiment of this application; and
FIG. 10 is a flowchart of another logistics system control method according to an embodiment of this application.

### DESCRIPTION OF REFERENCE NUMERALS:

100-shelving unit; 101-warehouse level; 102-warehouse column; 103-warehouse position;
200-guide rail; 201-first guide rail; 202-second guide rail; 210-sliding groove; 220-first conductive member; 221-live-wire conductor; 222-neutral-wire conductor;
300-mobile gantry; 310-support body; 311-upright post; 3111-guide groove; 312-crossbeam; 320-roller; 330-driving assembly; 340-second conductive member; 350-conductive contact piece; 360-identification marker;
400-goods retrieving or depositing device;
500-goods.

### DETAILED DESCRIPTION

In order to make objectives, technical solutions, and advantages of embodiments of this application clearer, the technical solutions in the embodiments of this application are to be clearly and completely described below with reference to the accompanying drawings in the embodiments of this application. Apparently, the embodiments to be described are a part rather than all of the embodiments of this application. All other embodiments obtained by a person of ordinary skill in the art based on the embodiments of this application without creative efforts shall fall within the protection scope of this application.

First, it should be understood by a person skilled in the art that these implementations are merely used for explaining the technical principles of this application, and are not intended to limit the protection scope of this application. A person skilled in the art may make corresponding adjustment to the implementations as required to adapt to specific application scenarios.

In addition, it should be noted that, in the description of this application, terms such as "upper", "lower", "left", "right", "front", "rear", "inner", and "outer" that indicate directions or position relationships are based on directions or position relationships shown in the accompanying drawings. This is merely for ease of description, and does not indicate or imply that a device or member needs to have a specific orientation, and is constructed and operated in a specific orientation, and therefore cannot be understood as a limitation on this application.

Moreover, it should also be noted that, in the description of this application, it should be noted that unless otherwise explicitly specified or defined, the terms such as "connect", and "connection" should be understood in a broad sense. For example, the connection may be a fixed connection, a detachable connection, or an integral connection; the connection may be a mechanical connection or an electrical connection; or the connection may be an internal communication between two members. A person of ordinary skill in the art may understand the specific meanings of the foregoing terms in this application according to specific situations.

In descriptions of this specification, descriptions with reference to terms such as "an embodiment", "some embodiments", "exemplary embodiments", "examples", "specific examples", or "some examples" mean that a specific feature, structure, material, or characteristic described with reference to the embodiment or example is included in at least one embodiment or example of the present disclosure. In this specification, schematic descriptions of the foregoing terms do not necessarily refer to a same embodiment or example. In addition, the described specific features, structures, materials, or characteristics may be combined in a proper manner in any one or more of the embodiments or examples.

A three-dimensional warehouse is widely applied in the field of warehouse logistics due to large storage capacity of the three-dimensional warehouse. The three-dimensional warehouse typically includes multiple shelving units, and is configured for robots to move between the shelving units to retrieve or deposit goods. During outbound of goods, robots usually retrieve the containers containing the goods from the corresponding warehouse positions, and transport the containers along predefined rails to sorting workstations for sorting, after which the goods are packaged and transferred outbound.

Currently, a shelving unit of the three-dimensional warehouse has a relatively high height and has multiple rows and multiple columns of warehouse positions for storing containers. The logistics system can use climbing robots to retrieve or deposit containers at high positions. A pair of upright posts is fixedly disposed on both sides of each warehouse position of the shelving unit, and the climbing robots can climb along the upright posts. However, a shelving unit with multiple columns of warehouse positions require multiple sets of upright posts to allow climbing robots to among warehouse positions of different columns, resulting in high production costs, significant space occupation of multiple sets of upright posts, and thus decreased storage density of the shelving unit. Moreover, conventional climbing robots, after retrieving or depositing goods in a warehouse position of a single column, when needing to move to warehouse position of a single column, needs to first move from the fixed upright post to the ground, then climb along another corresponding upright post, causing low logistics operation efficiency.

To address the above issues, embodiments of this application provide a shelving unit, a logistics system, a logistics system control method, and a storage medium. The logistics system provides a movable gantry structure on the shelving unit to enable climbing movement of a goods retrieving or depositing climbing device. This eliminates the need for fixed upright posts at warehouse positions of every column, thereby reducing production costs, improving space utilization, and ultimately increasing warehouse density. Moreover, the movable gantry structure can directly transport a climbing device to different warehouse columns without requiring the climbing device to first descend to the ground and then re-climb, thereby improving the logistics efficiency of the logistics system.

For convenience of understanding, application scenarios suitable for embodiments of this application are first described below.

The shelving unit and logistics system provided in embodiments of this application can be applied to inbound and outbound of inventory products in manufacturing plants, inbound and outbound of inventory products in the retail industry, and can also be applied to inbound and outbound sorting of express parcel in e-commerce logistics, among different fields. The products involved in transportation and inbound/outbound operations may be an industrial part, an electronic accessory or product, medicine, a clothing accessory, food, a book, or the like. The referred goods in this application may be the aforementioned products themselves or containers or pallets carrying above products. Embodiments of this application impose no specific restrictions in this regard.

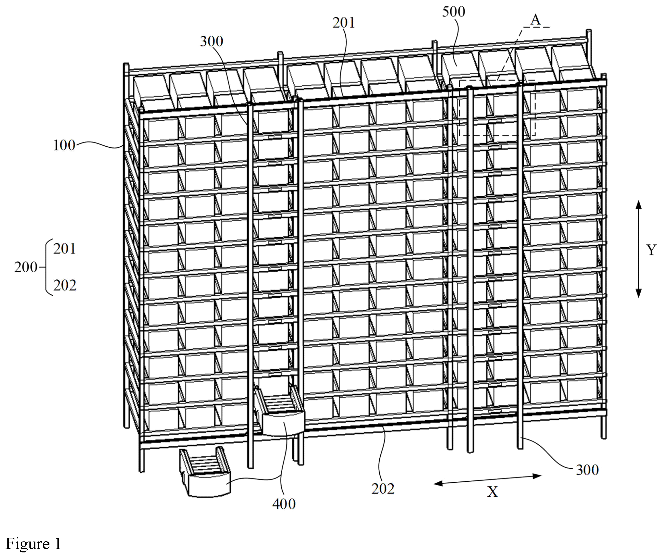

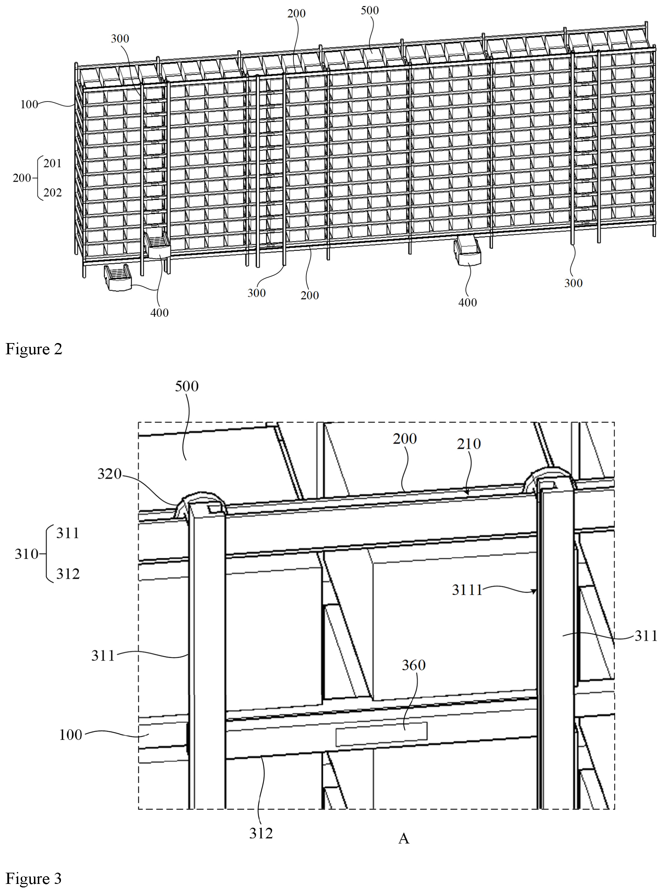

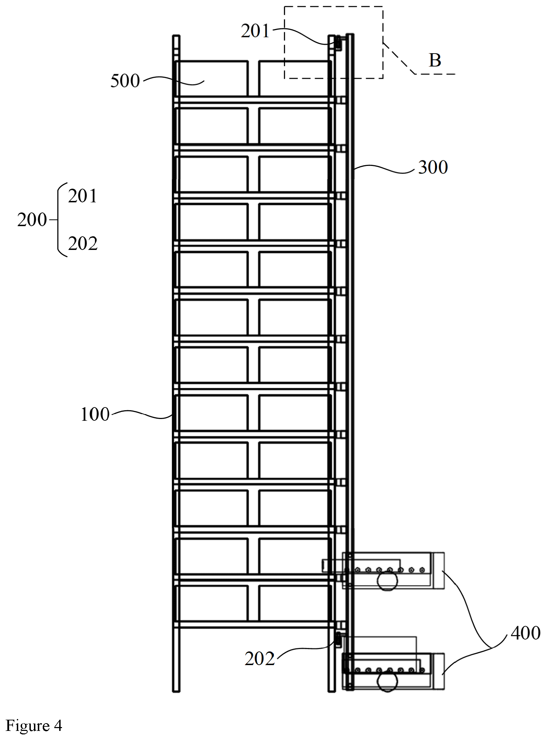

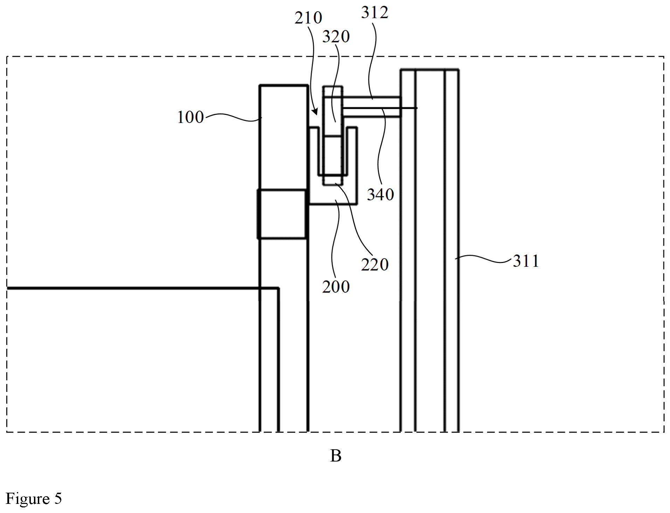

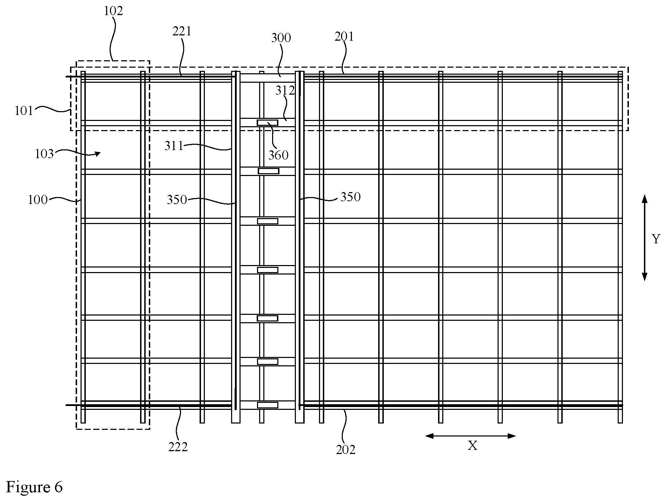

FIG. 1 is a first schematic structural diagram of a logistics system according to an embodiment of this application; FIG. 2 is a second schematic structural diagram of a logistics system according to an embodiment of this application; FIG. 3 is a partial view of a position A in FIG. 1; FIG. 4 is a side view of a logistics system according to an embodiment of this application; FIG. 5 is a partial view of a position B in FIG. 4; and FIG. 6 is a front view of a logistics system according to an embodiment of this application.

Referring to FIG. 1 to FIG. 6, this application provides a shelving unit 100. The shelving unit 100 includes a shelving unit body, a guide rail 200, and a movable gantry 300. The shelving unit 100 is configured to store goods 500. The guide rail 200 and the movable gantry 300 are both provided on the shelving unit 100, and the movable gantry 300 can move along the guide rail 200.

The shelving unit 100 can be applied in a logistics system. The logistics system includes a goods retrieving or depositing device 400, and the goods retrieving or depositing device 400 is configured to cooperate with the movable gantry 300 and retrieve or deposit goods 500 on the shelving unit 100.

The shelving unit 100 forms a warehouse area in the logistics system. The goods retrieving or depositing device 400 can move on the ground within the warehouse area and transport the goods 500. Moreover, the goods retrieving or depositing device 400 can also dock with the movable gantry 300 and climb along the movable gantry 300 to different heights of the shelving unit 100 to retrieve or deposit the goods 500.

In some embodiments, the shelving unit 100 includes multiple warehouse levels 101. The multiple warehouse levels 101 are disposed at intervals along the height direction of the shelving unit 100. Each warehouse level 101 has multiple warehouse positions 103 disposed along the length direction of the shelving unit 100. The warehouse positions 103 corresponding to different warehouse levels 101 form warehouse columns 102 disposed along the height direction of the shelving unit 100. In this way, the warehouse positions 103 on the shelving unit 100 can be disposed in a matrix.

It may be understood that the guide rail 200 is connected to the shelving unit 100, and the guide rail 200 extends along the length direction of the shelving unit 100. The movable gantry 300 is located on the side of the shelving unit 100, and the movable gantry 300 is movably connected to the guide rail 200. The movable gantry 300 extends along the height direction of the shelving unit 100, and the goods retrieving or depositing device 400 can dock with the movable gantry 300. When the goods retrieving or depositing device 400 moves along the extension direction of the movable gantry 300, the goods retrieving or depositing device 400 can align with warehouse levels 101 at different heights. When the movable gantry 300 moves along the guide rail 200, both the movable gantry 300 and the goods retrieving or depositing device 400 on the movable gantry 300 can align with warehouse columns 102 at different positions. In this way, the goods retrieving or depositing device 400 can retrieve or deposit goods 500 from warehouse positions 103 at various locations on the shelving unit 100.

Since the movable gantry 300 in embodiments of this application can move along the length direction of the shelving unit 100, compared to the prior art, in the logistics system provided in this application, the shelving unit 100 does not need fixed rails for the goods retrieving or depositing device 400 to climb in each warehouse column 102. This reduces the manufacturing cost of the logistics system and increases the warehouse density of the shelving unit 100. In embodiments of this application, when the logistics system receives a goods retrieving or depositing instruction, the movable gantry 300 can move to the corresponding warehouse column 102. The goods retrieving or depositing device 400 only needs to move to the docking position with the movable gantry 300 and climb along the movable gantry 300 to the warehouse level 101 at the corresponding height.

It should be noted that in the logistics system provided in embodiments of this application, the movable gantry 300 moves to warehouse columns 102 at different locations, thereby enhancing the flexibility of the goods retrieving or depositing process for the goods retrieving or depositing device 400. When the device 400 needs to retrieve or deposit goods 500 from or to warehouse positions 103 in different warehouse columns 102 of the shelving unit 100, the goods retrieving or depositing device 400 does not need to return to the ground to locate the corresponding warehouse column 102 and re-climb. Instead, the goods retrieving or depositing device 400 can directly move to the corresponding warehouse column 102 through the movable gantry 300. This improves the efficiency of the logistics system.

The specific structure of the movable gantry 300 and the detailed cooperation between the movable gantry 300 and the guide rail 200 are described in detail below.

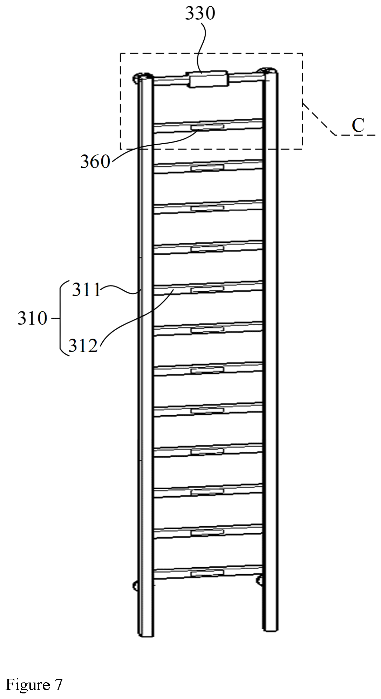

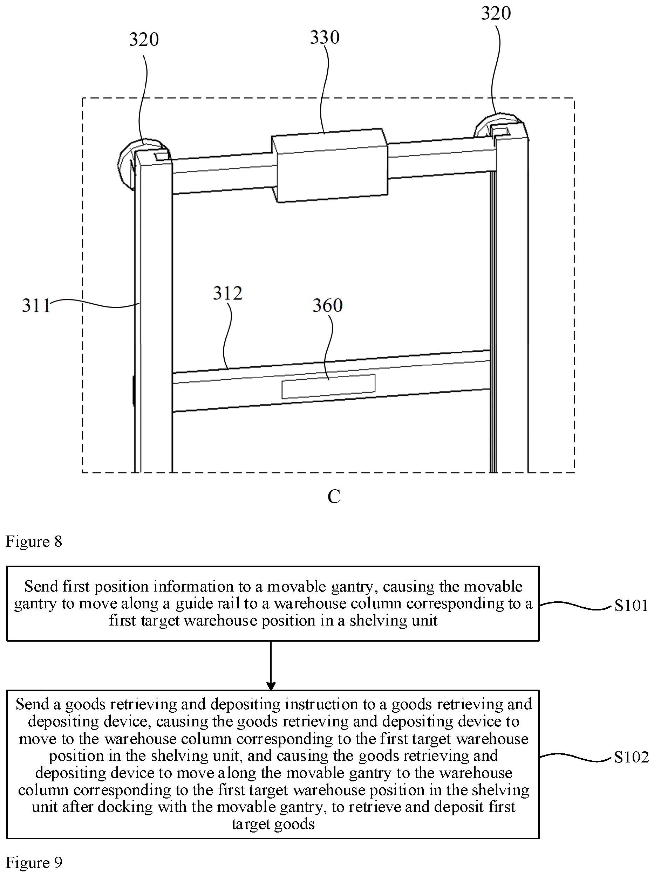

FIG. 7 is a schematic structural diagram of a movable gantry in a logistics system according to an embodiment of this application; and FIG. 8 is a partial view of a position C in FIG. 7.

First, the length direction of the shelving unit 100 is defined as the X-direction, and the height direction of the shelving unit 100 is defined as the Y-direction. The guide rail 200 extends along the X-direction; the movable gantry 300 extends along the Y-direction; and the movable gantry 300 can move along the X-direction. The warehouse positions 103 disposed along the X-direction form the warehouse level 101, and the warehouse positions 103 disposed along the Y-direction form the warehouse column 102.

Referring to FIG. 1 to FIG. 8, in some embodiments, the guide rail 200 has a sliding groove 210, the sliding groove 210 can extend along the length direction of the guide rail 200, the movable gantry 300 may include a support body 310 and a roller 320, the roller 320 is rotatably connected to the support body 310, at least part of the roller 320 is located in the sliding groove 210, and when the movable gantry 300 moves along the guide rail 200, the roller 320 rolls along the sliding groove 210, and the sliding groove 210 provides a guiding function for the rolling of the roller 320.

**It** may be understood that the sliding groove 210 extends along the X-direction. Through the roller 320 abutting against the sliding grooves 210, the guide rail 200 can provide a supporting function for the movable gantry 300. Moreover, since the contact between the roller 320 and the sliding groove 210 is a rolling friction, the friction between the movable gantry 300 and the guide rail 200 can be reduced when the movable gantry 300 moves along the X-direction, thereby improving the smoothness of the movable gantry 300 moving relative to the guide rail 200.

For example, the groove opening of the sliding groove 210 can be oriented upward, and the cross-sectional shape of the sliding groove 210 can be a "U" shape. In addition to providing support and guidance for the movable gantry 300, this can also provide positioning for the roller 320, preventing the rollers 320 from coming out of the sliding groove 210 during the movement of the movable gantry 300. Certainly, the groove opening of the sliding groove 210 may alternatively face the side of the shelving unit 100, and the cross-section of the sliding groove 210 may also be an "L" shape or other shapes, provided that it fulfills the functions of supporting, guiding, and positioning the movable gantry 300. Embodiments of this application impose no specific restrictions in this regard.

In some embodiments, there may be multiple rollers 320. The multiple rollers 320 may be distributed at intervals along a width direction of the support body 310, and the multiple rollers 320 are all rollingly disposed in sliding groove 210. In this way, multiple support points are provided for the movable gantry 300 on the guide rail 200, thereby improving movement stability of the movable gantry 300 relative to the guide rail 200.

It may be understood that, when the movable gantry 300 moves relative to the guide rail 200 along the X-direction, the multiple rollers 320 simultaneously roll within the sliding groove 210. The rotation axes of the multiple rollers 320 relative to the support body 310 may be parallel to one another, and the rollers 320 located in the same guide rail 200 are disposed at intervals along the X-direction.

For example, the number of the rollers 320 may be two, three, four, or more, and embodiments of this application impose no specific restrictions in this regard. For example, two rollers 320 may be provided in each guide rail 200, and the two rollers 320 are connected to both ends of the support body 310 along the X-direction through a rotating shaft.

In some embodiments, the support body 310 may include at least two upright posts 311 and multiple crossbeams 312, all the upright posts 311 extend along the height direction of the shelving unit 100, the crossbeams 312 are connected between the two upright posts 311, the movable gantry 300 may further include a driving assembly 330, the driving assembly 330 is disposed on the crossbeams 312, and the driving assembly 330 is configured to drive the rollers 320 to rotate.

It may be understood that when the driving assembly 330 is started, the driving assembly 330 drives the rollers 320 to rotate, thereby utilizing the friction between the rollers 320 and the sliding groove 210 to drive the entire mobile gantry 300 to move relative to the shelving unit 100 along the X-direction. Additionally, the distance of movement of the mobile gantry 300 along the X-direction can be preset based on the number of rotations of the rollers 320 driven by the drive assembly 330. In this way, the position of the mobile gantry 300 along the length of the shelving unit 100 can be precisely adjusted according to the requirements of inbound or outbound orders.

In embodiments of this application, the driving assembly 330 may be powered by built-in voltage of the movable gantry 300, or may be powered by an external power source. Supplying power by using the external power source is beneficial to light weight of the movable gantry 300. In this way, a driving force requirement of the driving assembly 330 can be reduced. This is described below.

Still referring to FIG. 1 to FIG. 8, in some embodiments, the logistics system may further includes a first conductive member 220, the first conductive member 220 is disposed in the sliding groove 210 and extends along the sliding groove 210, The movable gantry 300 may include a second conductive member 340, the second conductive member 340 is disposed on the rollers 320 and electrically connected to the first conductive member 220, the second conductive member 340 is electrically connected to the driving assembly 330, and the first conductive member 220 is configured to supply power to the driving assembly 330 through the second conductive member 340.

It may be understood that the second conductive member 340 may be connected to an external power source. For example, the second conductive member 340 may be electrically connected to an external utility power. The second conductive member 340 conducts electrical energy to the first conductive member 220, and the first conductive member 220 transmits the electrical energy to the driving assembly 330, thereby supplying power to the driving assembly 330. This eliminates the need to provide a power source on the movable gantry 300, reducing the occupied space of the movable gantry 300 and enabling continuous and stable operation of the movable gantry 300.

It should be noted that the second conductive member 340 extends along the X-direction of the sliding groove 210. During the movement of the movable gantry 300 along the X-direction on the guide rail 200, the second conductive member 340 can maintain an electrically connected state with the first conductive member 220 at all times. In this way, throughout the entire movement range of the movable gantry 300, the second conductive member 340 can supply power to the driving assembly 330.

In some embodiments, the driving assembly 330 may include a driving unit, a controlling unit, and a transmission member, and the second conductive member 340 is electrically connected to the control unit which is electrically connected to the driving unit, and an output end of the driving unit is connected to the rollers 320 through the transmission member. This improves the stability and reliability of the roller 320 as it rolls along the sliding groove 210.

It may be understood that the driving assembly 330 may be disposed opposite to the guide rail 200. The driving unit may be a motor, and the driving unit can drive the multiple rollers 320 to rotate simultaneously through a transmission member or drive a single roller 320 to rotate individually.

For example, the transmission member may be a synchronous pulley and synchronous belt structure, or the transmission member may be a multi-gear meshing transmission structure, or the transmission member may be a transmitting shaft and gear structure. Embodiments of this application impose no specific restrictions in this regard.

It should be noted that the second conductive member 340 may be a metal contact structure. The metal contact may be disposed on the inner side of the roller 320 and electrically connected to the first conductive member 220 in the sliding groove 210 through the contact between the rollers 320 and the sliding groove 210. The first conductive member 220 may be part of the guide rail 200, that is, at least a part of the guide rail 200 is made of conductive metal. After an external power source supplies power to the guide rail 200, electrical energy can be transmitted to the second conductive member 340 through the rollers 320.

In embodiments of this application, the power supply voltage achieved through the first conductive member 220 on the guide rail 200 may be 220 V, 380 V, etc. Taking a three-phase power source as an example, there may be multiple guide rails 200. The multiple guide rails 200 can respectively serve as the neutral-wire and live-wire in the three-phase power source. This is described below.

In some embodiments, as shown in Fig. 1 and Fig. 4, the guide rail 200 may include a first guide rail 201 and a second guide rail 202, the first guide rail 201 is disposed at a top of the shelving unit body 100, and the second guide rail 202 is disposed at a bottom of the shelving unit body 100, and a height of the movable gantry 300 matches the height of the shelving unit body 100, and two ends of the movable gantry 300 are movably connected to the first guide rail 201 and the second guide rail 202 respectively, thereby improving the reliability of movement of the movable gantry 300 along a side of the shelving unit 100.

The first conductive member 220 may include a live-wire conductive member 221 and a neutral-wire conductive member 222, as shown in Fig. 6. The live-wire conductive member 221 is disposed on the first guide rail 201, and the neutral-wire conductive member 222 is disposed on the second guide rail 202. The driving assembly 330 may be disposed on the top crossbeam 312 opposite to the first guide rail 201 to enhance safety.

It may be understood that there are two upright posts 311. Each upright post 311 is provided with a conductive contact piece 350, and the contact piece 350 extends along the height direction of the movable gantry 300. The conductive contact pieces 350 on the two upright posts 311 are electrically connected to the live-wire conductive member 221 and the neutral-wire conductive member 222 respectively, thereby enabling connection to an external power source. This facilitates wiring, improves safety, and ensures stable power supply.

For example, the conductive contact piece 350 may be a metal contact piece extending along the Y-direction. The electrical energy of the first conductive member 220 can be transmitted to the conductive contact piece 350 through the second conductive member 340. The length of the conductive contact piece 350 may match the height of the movable gantry 300 in the Y-direction.

In some embodiments, as shown in Fig. 3, inner sides of both the upright posts 311 can be provided with guide grooves 3111, the guide grooves 3111 extend along the height direction of the movable gantry 300, and the conductive contact pieces 350 can be disposed within the guide grooves 3111. When the goods retrieving or depositing device 400 docks with the movable gantry 300, at least part of the structures on both sides of the goods retrieving or depositing device 400 respectively abut against the guide grooves 3111 of the two upright posts 311, and the goods retrieving or depositing device 400 is electrically connected to the conductive contact piece 350.

It may be understood that through docking with the guide grooves 3111 of the two upright posts 311, the goods retrieving or depositing device 400 can perform climbing along the Y-direction on the movable gantry 300, thereby improving the smoothness of movement of the goods retrieving or depositing device 400 along the movable gantry 300. When docking with the guide groove 3111, the goods retrieving or depositing device 400 also electrically connects with the metal piece in the guide groove 3111, to supply power to the goods retrieving or depositing device 400 through the upright post 311.

It should be noted that the goods retrieving or depositing device 400 is provided with a driving assembly, for example, a motor and a power source, to provide power for climbing. When the goods retrieving or depositing device 400 climbs along the movable gantry 300, electrical energy input from an external power source is transmitted through the conductive contact piece 350 to power the driving assembly of the goods retrieving or depositing device 400 and charge a battery of the goods retrieving or depositing device 400 battery. In this way, when climbing along the movable gantry 300, the goods retrieving or depositing device 400 does not consume a circuit of its own battery, allowing for reduced power and size of the motor of the goods retrieving or depositing device 400.

Moreover, when the goods retrieving or depositing device 400 detaches from the movable gantry 300 to move on the ground and deliver goods 500, it may be ensured that the goods retrieving or depositing device 400 maintains a sufficient battery level. This reduces the charging cycles and frequency of the goods retrieving or depositing device 400 and enhances logistics efficiency. In this way, the logistics system can be provided with fewer goods retrieving or depositing devices 400 to meet the logistics efficiency requirements, thereby reducing costs.

In some embodiments, the first conductive member 220 and the guide rail 200 may be an integral molded piece, thereby enabling direct power supply through the guide rail 200 to ensure power supply reliability. For example, the guide rail 200 may be made of metal, and the live-wire and neutral-wire of the external power source may be directly electrically connected to the two guide rails 200.

In embodiments of this application, the multiple crossbeams 312 are disposed at intervals along the height direction of the shelving unit 100, and the distance between adjacent crossbeams 312 matches a level height of the warehouse level 101, thereby preventing the goods retrieving or depositing device 400 from interfering with the crossbeams 312 when retrieving goods from and depositing goods to the warehouse positions 103.

It may be understood that the crossbeams 312 extend along the X-direction and are parallel to the moving direction of the movable gantry 300. The crossbeams 312 may be disposed at the upper or lower edge of the warehouse position 103. When the movable gantry 300 moves along the X-direction, the crossbeams 312 may constantly maintain the opening of the warehouse position 103 in an unobstructed state.

A side of the crossbeam 312 facing away from the shelving unit 100 may be provided with an identification marker 360. When the goods retrieving or depositing device 400 is aligned with the identification marker 360, a position of the warehouse level 101 corresponding the crossbeams 312 is read through the identification marker 360, thereby improving the accuracy of the moving position of the goods retrieving or depositing device 400 when the goods retrieving or depositing device 400 moves along the movable gantry 300.

For example, the identification marker 360 may be a QR code, a photoelectric sensor, or the like. Based on a type of the identification marker 360, the goods retrieving or depositing device 400 may be provided with a corresponding reading device. When the goods retrieving or depositing device 400 moves along the movable gantry 300, the information of the identification marker 360 can be accurately read to precisely determine the information of the warehouse position 103 corresponding to the identification marker 360.

It should be noted that each shelving unit 100 may be provided with one, two, or more movable gantries 300, and the movement of each movable gantry 300 relative to the shelving unit 100 may be independently controlled. Moreover, there may be multiple shelving units. The multiple shelving units may be disposed at intervals. There is a passage between adjacent shelving units. A side of each of the two adjacent shelving units facing the same passage may be provided with a movable gantry 300. When performing climbing, the goods retrieving or depositing device 400 can simultaneously dock with the movable gantries 300 on both sides of the passage, to improve the stability of the climbing movement of the goods retrieving or depositing device 400.

The multiple shelving units 100 may form a warehouse area. After detaching from the movable gantry 300, the goods retrieving or depositing device 400 may also move in the passage or outside a range of the warehouse area. A specific path of the goods retrieving or depositing device 400 may be planned based on the task the goods retrieving or depositing device 400 performs. This is not elaborated herein.

The logistics system provided in embodiments of this application may further include a packaging device. The packaging device may include a packaging station and a buffer mechanism, where the packaging station is opposite to the buffer mechanism. The goods retrieving or depositing device 400 may dock with the buffer mechanism. The goods retrieving or depositing device 400 may retrieve an empty container from the buffer mechanism, or the goods retrieving or depositing device 400 can place a container loaded with sorted goods 500 onto the buffer mechanism. After the goods 500 in the container are removed for packaging, the goods retrieving or depositing device 400 may return the empty container to the warehouse position 103 corresponding to the shelving unit 100, thereby improving the efficiency of the logistics system.

It should be noted that the space between the packaging device and the shelving unit 100 only needs to be reserved for a passage for the movement of the goods retrieving or depositing device 400. Since the goods retrieving or depositing device 400 has a small size, the space occupation between the periphery of the shelving unit 100 and the packaging device can be effectively reduced, improving space utilization while simplifying the movement path of the goods retrieving or depositing device 400.

An embodiment of this application further provides a logistics system control method. The method is used for a controller of the logistics system. The method may be applied to the logistics system in the foregoing technical solutions. The logistics system control method may have all technical effects of the foregoing logistics system. This is not elaborated herein again. The following describes the logistics system control method in detail.

FIG. 9 is a flowchart of a logistics system control method according to an embodiment of this application.

Referring to FIG. 9 and with reference to FIG. 1 to FIG. 8, in some embodiments, this application provides a first logistics system control method. The method is performed by a controller of the logistics system. The controller may be a dispatch center of the logistics system. The method includes:

S101: Send first position information to a movable gantry 300, causing the movable gantry 300 to move along a guide rail 200 to a warehouse column 102 corresponding to a first target warehouse position 103 in a shelving unit 100.

It may be understood that the first position information includes coordinate information of the first target warehouse position along an X-direction on the shelving unit 100. After receiving the first position information, the movable gantry 300 may move along the guide rail 200 to the warehouse column 102 corresponding to the coordinate position.

For example, the shelving unit 100 has multiple warehouse columns 102, with coordinates of the multiple warehouse columns 102 being (1, 2, 3, 4, ..., a) respectively. The first position information received by the movable gantry 300 includes one of the foregoing coordinate values.

S102: Send a goods retrieving or depositing instruction to a goods retrieving or depositing device, causing the goods retrieving or depositing device to move to the warehouse column corresponding to the first target warehouse position in the shelving unit, and causing the goods retrieving or depositing device to move along the movable gantry to the warehouse column corresponding to the first target warehouse position in the shelving unit after docking with the movable gantry, to retrieve or deposit first target goods.

It may be understood that the goods retrieving or depositing instruction includes coordinate information of the first target warehouse position along the X-direction and Y-direction on the shelving unit 100. After receiving the goods retrieving or depositing instruction, the goods retrieving or depositing device 400 may first move along the ground to locate the corresponding warehouse column 102 and then move along the movable gantry 300 to the corresponding warehouse level 101.

For example, the shelving unit 100 has multiple warehouse columns 102 and warehouse levels 101, coordinates of the multiple warehouse columns 102 are (1, 2, 3, 4, ..., a), and coordinates of the multiple warehouse levels 101 are (1, 2, 3, 4, ..., b) respectively. In this case, the coordinates corresponding to each warehouse position are ([1, 1], [1, 2], ..., [1, b], [2,1], ..., [2, b], ..., [a, b]). The coordinate information included in the goods retrieving or depositing instruction received by the goods retrieving or depositing device 400 includes one of the foregoing warehouse position coordinate values.

It should be noted that the ground on the side of the shelving unit 100 may be provided with identification markers such as QR codes and magnetic strips. When moving on the ground, the goods retrieving or depositing device 400 can accurately move to the corresponding warehouse column 102 by reading the identification markers.

After arriving at the location of the first target warehouse position, the goods retrieving or depositing device 400 may retrieve the first target goods from the first target warehouse position.

The logistics system control method provided in this application may allow the goods retrieving or depositing device 400 to climb through the movable gantry 300, thereby eliminating the need to provide multiple climbing rails, reducing costs, improving warehouse space utilization, and enhancing logistics efficiency.

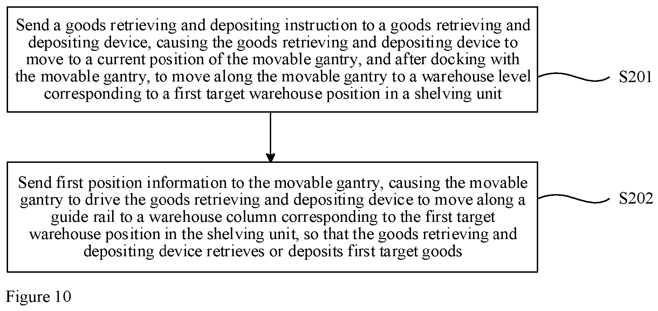

FIG. 10 is a flowchart of another logistics system control method according to an embodiment of this application.

Referring to FIG. 10 and with reference to FIG. 1 to FIG. 8, in some embodiments, this application provides a first logistics system control method. The method is performed by a controller of the logistics system. The controller may be a dispatch center of the logistics system. The method includes:

S201: Send a goods retrieving or depositing instruction to a goods retrieving or depositing device, causing the goods retrieving or depositing device to move to a current position of the movable gantry, and after docking with the movable gantry, to move along the movable gantry to a warehouse level corresponding to a first target warehouse position in a shelving unit.

It may be understood that, to prevent the goods retrieving or depositing device from occupying an aisle between shelving units, the goods retrieving or depositing device may dock at any position along the length direction of the shelving unit. That is, the goods retrieving or depositing device can climb onto the movable gantry when the movable gantry aligns with any warehouse column of the shelving unit, thereby fully utilizing aerial space and improving goods retrieving or depositing efficiency.

S202: Send first position information to the movable gantry, causing the movable gantry to drive the goods retrieving or depositing device to move along a guide rail to a warehouse column corresponding to the first target warehouse position in the shelving unit, so that the goods retrieving or depositing device retrieves or deposits first target goods.

It may be understood that, while the movable gantry moves to the target warehouse position, the goods retrieving or depositing device may simultaneously move vertically. In this way, the goods retrieving or depositing device does not first traverse a horizontal path on the ground and then a vertical path along the movable gantry. Instead, as the movable gantry moves horizontally, the goods retrieving or depositing device moves vertically relative to the movable gantry. That is, a movement path of the goods retrieving or depositing device relative to the shelving unit is a composite movement in both horizontal and vertical directions, shortening the path of the goods retrieving or depositing device to the target warehouse position and improving logistics efficiency.

In some embodiments, the controller may send a second goods retrieving or depositing instruction to the goods retrieving or depositing device, enabling the goods retrieving or depositing device to execute a second retrieving or depositing task after completing the first retrieving or depositing instruction. If the first retrieving or depositing instruction is a retrieval task, the second retrieving or depositing instruction is a deposit task; or if the first retrieving or depositing instruction is a deposit task, the second retrieving or depositing instruction is a retrieval task. In the following descriptions, it is assumed that the first retrieving or depositing instruction is the retrieval task and the second retrieving or depositing instruction is the deposit task.

After retrieving the first target goods from the first target warehouse position, the goods retrieving or depositing device 400 may further perform a deposit operation on the second target warehouse position. The operation specifically includes:
Step 1: Send second position information to the movable gantry 300, causing the movable gantry 300 to move along a guide rail 200 to a warehouse column 102 corresponding to a second target warehouse position in a shelving unit 100.

The second position information is similar to the first position information and includes the X-direction coordinate (1, 2, 3, 4, ..., a) of the warehouse column 102 in the shelving unit 100.

Step 2: Send a second goods retrieving or depositing instruction to the goods retrieving or depositing device, causing the goods retrieving or depositing device to move along the movable gantry to the warehouse level corresponding to the second target warehouse position in the shelving unit, so as to deposit the target goods.

Since the goods retrieving or depositing device 400 is mounted on the movable gantry 300 and moves along with the movable gantry 300, the goods retrieving or depositing device 400 does not need to return to the ground and locate the warehouse column 102 of the second target warehouse position. Therefore, the second goods retrieving or depositing instruction may include the coordinate of the warehouse level 101 where the second target warehouse position is located in the shelving unit 100, that is the Y-direction coordinate of the second target warehouse position in the shelving unit 100, (1, 2, 3, 4, ..., b).

In some embodiments, after the goods retrieving or depositing device 400 retrieves the first target goods from the first target warehouse position, the method further includes:
sending an outbound instruction to the goods retrieving or depositing device 400, causing the goods retrieving or depositing device 400 to move along the movable gantry 300 to the ground and detach from the movable gantry 300, and causing the goods retrieving or depositing device 400 to transport the first target goods outbound.

It should be noted that during outbound, the goods retrieving or depositing device 400 may transport the first target goods to a packaging area or a sorting area, or first transport to the sorting area and then to the packaging area, depending on the outbound procedure of the logistics system. Embodiments of this application impose no specific restrictions in this regard.

In some embodiments, before the sending first position information to the movable gantry 300, the method further includes:
receiving order information and determining a target shelving unit 100 and a target warehouse position based on the order information, where the target warehouse position is located on the shelving unit 100, and the target warehouse position includes the first target warehouse position.

It should be noted that the controller may retrieve warehouse position information of the target goods from a memory of the logistics system based on received order information, thereby determining the target shelving unit 100 and the target warehouse position. The shelving unit 100 and warehouse positions in the logistics system are all assigned with corresponding numbers.

In some embodiments, before the goods retrieving or depositing device 400 docks with the movable gantry 300, the method further may include:

The goods retrieving or depositing device 400 identifies ground marker information, and moves to a position corresponding to the movable gantry 300 based on the ground marker information.

For example, the ground marker information may include, but is not limited to, magnetic strips, QR codes, etc. Embodiments of this application impose no specific restrictions in this regard.

In some embodiments, after the goods retrieving or depositing device 400 docks with the movable gantry 300, the method further may include:

The goods retrieving or depositing device 400 identifies an identification marker on the movable gantry 300, and moves to a warehouse level corresponding to the first target warehouse position in the shelving unit 100 based on the identification marker. The identification marker may be consistent with that in the technical solutions of the foregoing logistics system, which will not be elaborated herein again.

The foregoing logistics system control method is a goods outbound method that is performed by a controller of the logistics system. The goods inbound method that is performed by the controller of the logistics system may be similar to the foregoing inbound procedure, which will not be elaborated herein again.

An embodiment of this application further provides a storage medium, where the storage medium stores computer-executable instructions which, when executed, are used to implement the logistics system control method in the foregoing technical solutions.

The storage medium may be a computer-readable storage medium or a communication medium. The communication medium includes any medium that facilitates transmission of a computer program from one place to another. The computer-readable storage medium may be any available medium that can be accessed by a general-purpose or special-purpose computer. For example, the computer-readable storage medium is coupled to a processor, enabling the processor to read information from the computer-readable storage medium and write information to the computer-readable storage medium. Certainly, the computer-readable storage medium may also be an integral part of the processor. The processor and the computer-readable storage medium may be located in an application-specific integrated circuit (ASIC). In addition, the ASIC may be located in a user device. Moreover, the processor and the computer-readable storage medium may also exist as discrete components in a communication device.

For example, the storage medium may be implemented by any type of volatile or non-volatile storage device or a combination thereof, such as: a static random-access memory (SRAM), an electrically-erasable programmable read-only memory (EEPROM), an erasable programmable read-only memory (EPROM), a programmable read-only memory (PROM), a read-only memory (ROM), a magnetic memory, a flash memory, a magnetic disk or an optical disk. The storage medium may be any available medium that can be accessed by a general-purpose or special-purpose computer.

Finally, it should be noted that the foregoing embodiments are merely used for describing the technical solutions of this application, but are not intended to limit this application. Although this application is described in detail with reference to the foregoing embodiments, it should be understood by a person of ordinary skill in the art that modifications can be made to the technical solutions described in the foregoing embodiments, or equivalent replacements can be made to some or all of the technical features in the technical solutions; and such modifications or replacements will not cause the essence of corresponding technical solutions to depart from the scope of the technical solutions in embodiments of this application.

## Claims

1. A shelving unit, comprising:
a shelving unit body, comprising multiple warehouse levels, wherein the multiple warehouse levels are disposed at intervals along a height direction of the shelving unit, each warehouse level has multiple warehouse positions disposed along a length direction of the shelving unit, and corresponding warehouse positions in different warehouse levels form warehouse columns disposed along the height direction of the shelving unit;
a guide rail, wherein the guide rail is connected to the shelving unit body, and the guide rail is configured to extend along the length direction of the shelving unit; and
a movable gantry, wherein the movable gantry is located at a side of the shelving unit body, the movable gantry is movably connected to the guide rail, and the movable gantry is configured to extend along the height direction of the shelving unit;
wherein the movable gantry is configured to dock with or detach from a goods retrieving or depositing device, and when the movable gantry docks with the goods retrieving or depositing device, the movable gantry is configured to allow the goods retrieving or depositing device to move along the height direction of the shelving unit.

2. The shelving unit according to claim 1, wherein the guide rail has a sliding groove, the sliding groove is configured to extend along a length direction of the guide rail;
wherein the movable gantry comprises a support body and a roller , the roller is rotatably connected to the support body, at least part of the roller is located in the sliding groove, and when the movable gantry moves along the guide rail, the roller is configured to roll along the sliding groove.

3. The shelving unit according to claim 2, wherein there are multiple rollers, the multiple rollers are distributed at intervals along a width direction of the support body, and the multiple rollers are all rollingly disposed in the sliding groove.

4. The shelving unit according to claim 2 or 3, wherein the guide rail comprises a first guide rail and a second guide rail, the first guide rail is disposed at a top of the shelving unit, and the second guide rail is disposed at a bottom of the shelving unit; wherein a height of the movable gantry matches the height of the shelving unit, and two ends of the movable gantry are movably connected to the first guide rail and the second guide rail respectively.

5. The shelving unit according to claim 4, wherein the support body comprises at least two upright posts and multiple crossbeams, all the upright posts are configured to extend along the height direction of the shelving unit, and the crossbeams are connected between the two upright posts; wherein the movable gantry further comprises a driving assembly, the driving assembly is disposed on the crossbeams, and the driving assembly is configured to drive the rollers to rotate.

6. The shelving unit according to claim 5, further comprising a first conductive member, wherein the first conductive member is disposed in the sliding groove and is configured to extend along the sliding groove;
wherein the movable gantry comprises a second conductive member, the second conductive member is disposed on the roller and electrically connected to the first conductive member, and the second conductive member is electrically connected to the driving assembly; and
wherein the first conductive member is configured to supply power to the driving assembly through the second conductive member.

7. The shelving unit according to claim 6, wherein the driving assembly comprises a driving unit, a controlling unit, and a transmission member, the second conductive member is electrically connected to the control unit, the control unit is electrically connected to the driving unit, and an output end of the driving unit is connected to the rollers through the transmission member.

8. The shelving unit according to claim 6, wherein the first conductive member comprises a live-wire conductive member and a neutral-wire conductive member, the live-wire conductive member is disposed on the first guide rail, and the neutral-wire conductive member is disposed on the second guide rail;
wherein the upright posts are provided with at least two conductive contact pieces, the conductive contact pieces are configured to extend along the height direction of the movable gantry, and at least two of the conductive contact pieces are electrically connected to the live-wire conductive member and the neutral-line conductive member respectively.

9. The shelving unit according to claim 8, wherein inner side of each upright post is provided with a guide groove, the guide groove is configured to extend along the height direction of the movable gantry, and the conductive contact pieces are disposed within the guide grooves respectively.

10. The shelving unit according to any one of claims 6 to 9, wherein the first conductive member and the guide rail are an integral molded piece.

11. The shelving unit according to any one of claims 5 to 9, wherein the multiple crossbeams are disposed at intervals along the height direction of the shelving unit, and a distance between adjacent crossbeams matches a level height of the warehouse level.

12. A logistics system, comprising a goods retrieving or depositing device and the shelving unit according to any one of claims 1 to 11; wherein the goods retrieving or depositing device is configured to dock with the movable gantry of the shelving unit and move along an extending direction of the movable gantry, and the movable gantry is configured to move along the guide rail of the shelving unit, to cause the goods retrieving or depositing device to align with different warehouse positions of warehouse levels at different heights of the shelving unit.

13. The logistics system according to claim 12, wherein the movable gantry is provided with conductive contact pieces, and when the goods retrieving or depositing device docks with the movable gantry, at least part of structures on both sides of the goods retrieving or depositing device are electrically connected to the conductive contact pieces.

14. The logistics system according to claim 12, wherein the movable gantry is provided with an identification marker on a side facing the goods retrieving or depositing device, and when the goods retrieving or depositing device is aligned with the identification marker, a position of a corresponding warehouse level is read by the goods retrieving or depositing device through the identification marker.

15. A logistics system control method, wherein the method is applied to a controller for the logistics system according to any one of claims 12 to 14, and the method comprises:
sending first position information to the movable gantry, causing the movable gantry to move along the guide rail to a warehouse column corresponding to a first target warehouse position in the shelving unit; and
sending a goods retrieving or depositing instruction to the goods retrieving or depositing device, causing the goods retrieving or depositing device to move to a warehouse column corresponding to the first target warehouse position in the shelving unit, and causing the goods retrieving or depositing device to move along the movable gantry to the warehouse column corresponding to the first target warehouse position in the shelving unit after docked with the movable gantry, to retrieve or deposit first target goods.

16. The logistics system control method according to claim 15, wherein before the sending first position information to the movable gantry, the method further comprises:
receiving order information and determining a target shelving unit and a target warehouse position according to the order information, wherein the target warehouse position is located on the target shelving unit, and the target warehouse position comprises the first target warehouse position.

17. The logistics system control method according to claim 15, wherein before the goods retrieving or depositing device docks with the movable gantry, the method further comprises:
identifying, by the goods retrieving or depositing device, ground marker information, and moving to a position corresponding to the movable gantry according to the ground marker information.

18. The logistics system control method according to claim 15, wherein after the goods retrieving or depositing device docks with the movable gantry, the method further comprises:
identifying, by the goods retrieving or depositing device, an identification marker on the movable gantry, and moving to a warehouse level corresponding to the first target warehouse position in the shelving unit according to the identification marker.

19. A logistics system control method, wherein the method is applied to a controller for the logistics system according to any one of claims 12 to 14, and the method comprises:
sending a goods retrieving or depositing instruction to the goods retrieving or depositing device, causing the goods retrieving or depositing device to move to a current position of the movable gantry, and to move along the movable gantry to a warehouse level corresponding to a first target warehouse position in the shelving unit after docking with the movable gantry; and
sending first position information to the movable gantry, causing the movable gantry to drive the goods retrieving or depositing device to move along the guide rail to a warehouse column corresponding to the first target warehouse position in the shelving unit, so that the goods retrieving or depositing device retrieves or deposits first target goods.

20. A storage medium, wherein the storage medium stores computer-executable instructions, the computer-executable instructions, when executed, are used to implement the logistics system control method according to any one of claims 15 to 19.
